Europäisches Patentamt

European Patent Office

Office européen des brevets

(11) Numéro de publication: **0 179 687**
**A1**

## (12) DEMANDE DE BREVET EUROPEEN

(21) Numéro de dépôt: **85401831.4**

(22) Date de dépôt: **20.09.85**

(51) Int. Cl.⁴: **H 01 Q 3/14**

(30) Priorité: **21.09.84 FR 8414568**

(43) Date de publication de la demande:
**30.04.86 Bulletin 86/18**

(84) Etats contractants désignés:
**DE GB**

(71) Demandeur: **THOMSON-CSF**
**173, Boulevard Haussmann**
**F-75379 Paris Cedex 08(FR)**

(72) Inventeur: **Commault, Yves**
**Thomson-CSF SCPI 173 bld. Haussmann**
**F-75379 Paris Cedex 08(FR)**

(72) Inventeur: **Thime, Jacques**
**Thomson-CSF SCPI 173 bld. Haussmann**
**F-75379 Paris Cedex 08(FR)**

(74) Mandataire: **Benoît, Monique et al,**
**THOMSON-CSF SCPI 19, avenue de Messine**
**F-75008 Paris(FR)**

(54) **Antenne hyperfréquence à balayage par prismes tournants.**

(57) La présente invention a pour objet une antenne hyperfréquence assurant, par rotation mécanique classique, un balayage en gisement par exemple et, par prismes tournants, simultanément un balayage en site.

A cet effet, l'antenne comporte à sa sortie deux prismes (21, 22) animés d'un mouvement de rotation contraire autour de l'axe (ZZ') de l'antenne, assurant ainsi le balayage en site.

FIG_1

EP 0 179 687 A1

0179687

ANTENNE HYPERFREQUENCE A BALAYAGE
PAR PRISMES TOURNANTS

La présente invention est relative aux antennes hyperfréquences assurant un balayage en gisement et/ou en site ; elle a plus particulièrement pour objet une antenne dans laquelle le balayage dans l'un des plans, gisement ou site, est assuré à l'aide de prismes tournants.

Différentes techniques sont connues qui permettent, à partir d'un faisceau d'énergie rayonné d'ouverture limitée, d'obtenir un balayage de ce faisceau selon un ou deux plans (site et/ou gisement).

Une première technique consiste à utiliser une antenne non déformable qui est montée sur un support mobile, le mouvement du support entraînant celui de l'axe de l'antenne et, par suite, du faisceau d'énergie émis par l'antenne. Un exemple en est l'antenne plate à fente. Une antenne de ce type a notamment pour inconvénient d'avoir une vitesse de rotation limitée, du fait qu'il s'agit d'un mouvement mécanique, et l'agilité qui en résulte pour le faisceau émis s'avère insuffisante dans de nombreuses applications.

Une seconde technique consiste à utiliser une antenne du type Cassegrain à laquelle on adjoint un miroir mobile . Le balayage du faisceau est alors obtenu par le mouvement conféré au miroir. Ce système permet une agilité de faisceau plus importante que précédemment, du fait que seule une petite pièce est mobile, mais elle reste toutefois insuffisante pour un certain nombre d'applications, notamment celle qui vise à élaborer une image synthétique où, ainsi qu'il est connu, les vitesses de balayage requises doivent être compatibles avec la cadence de renouvellement des images et sont donc très élevées.

Une troisième technique connue consiste à utiliser des réseaux de sources rayonnantes fixes, chacune des sources étant associée à un déphaseur. La commande (électronique) de la phase du rayonnement de chacune des sources permet d'obtenir un mouvement de balayage du faisceau. L'agilité de faisceau obtenue peut être très grande dans ce cas mais la complexité de ce type de système est grande, ce qui conduit à un coût élevé et à un volume qui peut le rendre inutilisable pour des applications embarquées.

La présente invention a pour objet une antenne susceptible de fournir un faisceau présentant une grande agilité, tout en restant relativement simple et peu onéreuse, telle que définie par la revendication 1.

D'autres objets, particularités et résultats de l'invention ressortiront de la description suivante, illustrée par les dessins annexés, qui représentent :

- la figure 1, une vue en perspective de l'antenne selon l'invention ;

- figure 2, un schéma synoptique de l'antenne selon l'invention ;

- les figures 3, 4a et 4b, des schémas explicatifs du fonctionnement de l'antenne selon l'invention ;

- la figure 5 une variante préférée de positionnement des prismes utilisés dans l'antenne selon l'invention ;

- la figure 6, les figures 7, a et b, et les figures 8, a, b et c, différents modes de réalisation des prismes utilisés dans l'antenne selon l'invention, dans lesquelles ceux-ci comportent des zones d'adaptation ;

- la figure 9, un mode de réalisation des prismes utilisés dans l'antenne selon l'invention, dans laquelle ceux-ci sont zonés ;

- les figures 10 et 11, a, b et c, des variantes de la figure précédente ;

- les figures 12, a et b et 13, a et b, différentes variantes de forme des prismes ;

- la figure 14, un autre mode de réalisation des prismes dans lequel ceux-ci sont réalisés dans un matériau à gradient d'indice ;

- la figure 15, une variante de réalisation des prismes dans laquelle ceux-ci ne sont pas identiques ;

- la figure 16, un mode de réalisation pratique de l'antenne selon l'invention.

Sur ces différentes figures, les mêmes références se rapportent aux mêmes éléments. En outre, la description qui suit est généralement faite dans le cas de l'émission pour simplifier l'exposé, étant entendu que l'antenne selon l'invention est utilisable en réception.

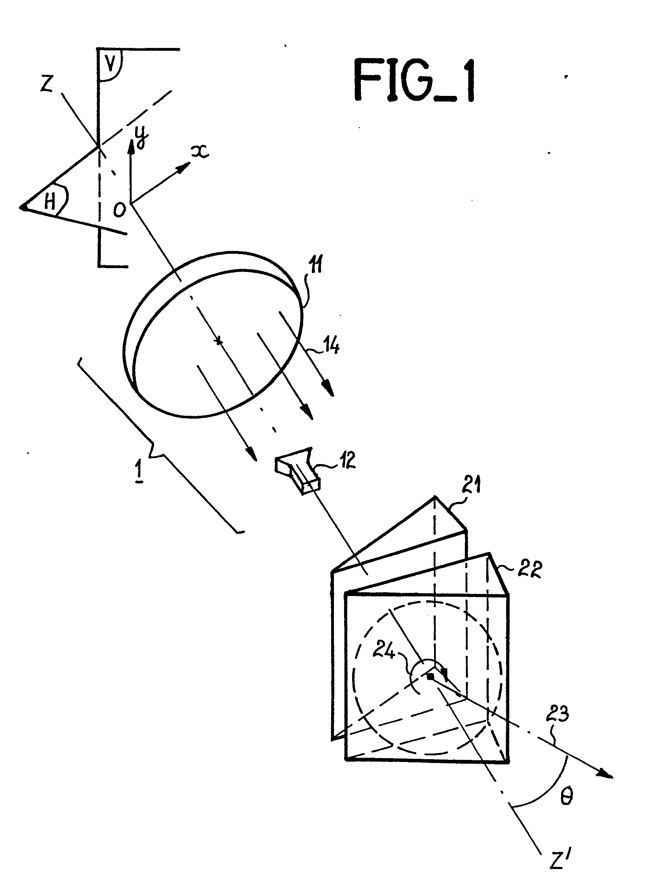

Sur la figure 1, on a donc représenté une vue en perspective de certains éléments principaux de l'antenne selon l'invention.

Sur cette figure, on trouve, alignés sur un axe ZZ' des moyens d'émission et/ou de réception 1, également appelés antenne, et par exemple deux prismes, 21 et 22.

L'antenne 1 est à titre d'exemple constituée par un réflecteur 11 (par exemple parabolique) éclairé par une source hyperfréquence 12. Toutefois cette antenne 1 peut affecter toute forme connue susceptible de fournir à l'émission, et de recevoir à la réception, un faisceau parallèle dans la direction ZZ', en polarisation rectiligne, circulaire ou elliptique, sous réserve que le rayonnement fourni puisse être considéré dans l'approximation de l'optique géométrique, le diagramme de rayonnement de l'antenne étant quelconque et étant susceptible d'être différent selon la fonction choisie (somme, différence, site, gisement, cosécante ....).

A titre d'exemple, on a représenté deux plans de référence, H pour horizontal et V pour vertical, l'axe ZZ' étant par exemple horizontal. On a représenté en outre deux axes Ox et Oy, respectivement horizontal et vertical, formant avec ZZ' un système d'axes orthogonaux.

Le rayonnement issu de l'antenne 1 dans la direction de l'axe ZZ', représenté par des flèches 14, vient frapper les deux prismes 21 et 22, susceptibles de tourner autour de l'axe ZZ' (flèche 24). Le rayonnement 23 issu du deuxième prisme est dévié d'un angle θ par

rapport à l'axe ZZ' selon un processus qui est décrit plus loin.

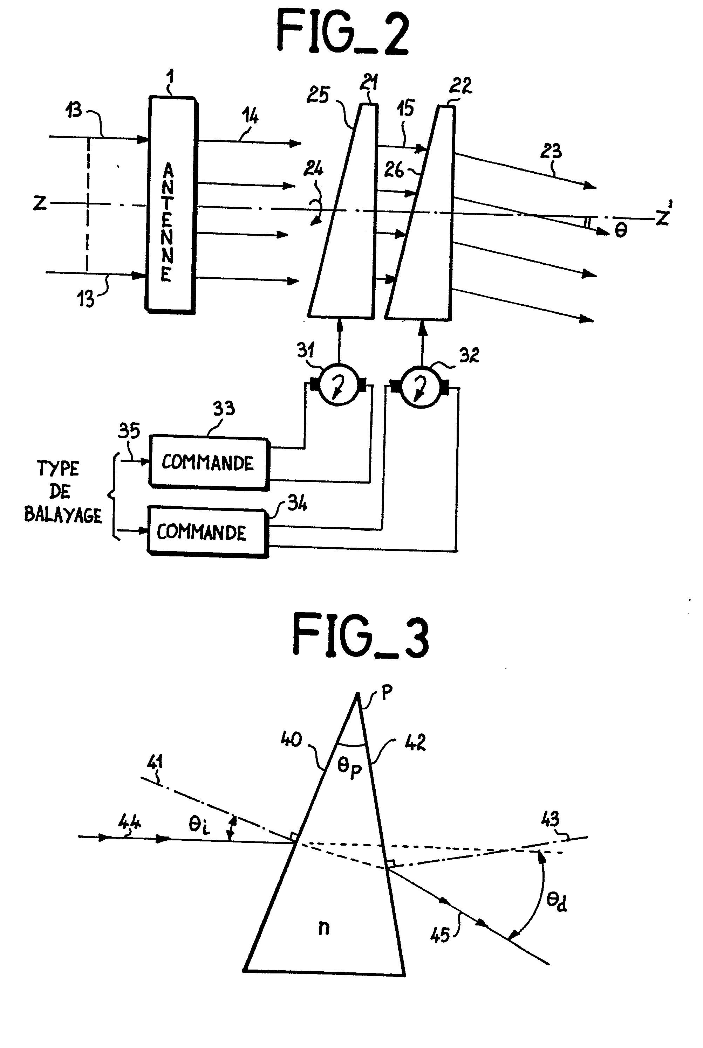

La figure 2 représente un schéma synoptique de l'antenne selon l'invention.

Sur cette figure, on retrouve l'antenne 1 schématisée ici par un bloc qui reçoit, classiquement, une ou plusieurs voies d'alimentation repérées globalement 13 (voie somme, voie différence etc...). L'antenne 1 émet le rayonnement 14 vers les deux prismes 21 et 22, susceptibles de tourner (flèche 24) autour de l'axe ZZ'. Le rayonnement émergeant 23 est dévié de l'angle θ par rapport à l'axe ZZ'.

Sur le synoptique de la figure 2, on a représenté deux moteurs, respectivement 31 et 32, pour assurer la rotation respectivement des deux prismes 21 et 22, étant bien entendu qu'un seul moteur peut le cas échéant être suffisant pour faire tourner les deux prismes. Ces moteurs sont commandés chacun dans l'exemple de la figure par un circuit électronique, respectivement 33 et 34, en fonction du type de balayage qui est souhaité (flèches 35).

Le fonctionnement du dispositif est décrit ci-après avec l'aide de la figure 3.

Ainsi qu'il est connu, la déviation $\theta_d$ apportée par un prisme P triangulaire d'angle au sommet $\theta_p$, d'indice $\underline{n}$, à un rayon incident 44 d'angle d'incidence $\theta_i$ par rapport à la normale 41 à la surface d'entrée 40 du prisme P, est donnée par :

$$\theta_d = (\theta_i - \theta_p) + \text{Arc sin} \left\{ n.\sin \left[ \theta_p - \text{Arc sin} (\frac{\sin \theta_i}{n}) \right] \right\} \qquad (1)$$

avec $n = \sqrt{\varepsilon_r}$ où $\varepsilon_r$ est la permittivité du matériau constituant le prisme et l'angle $\theta_d$ est mesuré par rapport à la direction 44 du rayonnement incident.

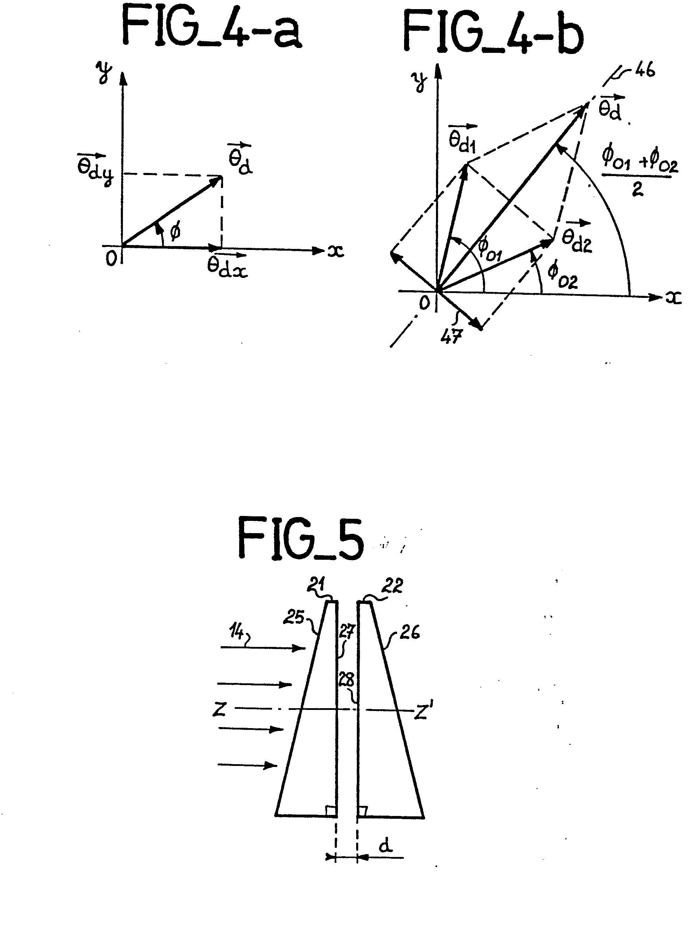

La déviation angulaire $\theta_d$ donnée par la formule (1) est exprimée dans le plan principal du prisme, c'est-à-dire un plan orthogonal à ses arêtes. Si on considère que la trace du plan principal du prisme dans le plan xOy (normal à ZZ', figure 1) fait un

angle $\phi$ avec l'axe Ox, on peut décomposer la déviation $\theta_d$ comme illustré sur la figure 4a en $\theta_{dx}$ et $\theta_{dy}$ comme suit :

$$\vec{\theta}_d = \vec{\theta}_{dx} + \vec{\theta}_{dy} \qquad (2)$$

avec : $\theta_{dx} = \theta_d \cos \phi$

$$\theta_{dy} = \theta_d \sin \phi \qquad (3)$$

Lorsque le prisme est animé d'un mouvement de rotation, on peut écrire :

$$\phi = \omega t + \phi_0 \qquad (4)$$

où $\omega$ est la vitesse angulaire du prisme, $\underline{t}$ le temps et $\phi_0$ l'angle de phase initial.

Avec un seul prisme, on constate que lorsque l'angle $\phi$ varie selon l'expression (4), l'extrémité du vecteur $\vec{\theta}_d$ balaie le plan Oxy selon un cercle, ce qui se traduit par le fait que le faisceau émergeant du prisme balaie l'espace selon un cône d'angle sommet $\theta_d$.

Lorsque l'on dispose, comme illustré sur les figures 1 et 2, deux prismes identiques, animés de vitesses de rotation $\omega_1$ et $\omega_2$ respectivement et dont les angles de phase initiale sont $\phi_{01}$ et $\phi_{02}$ respectivement, les déviations angulaires élémentaires conférées par chacun des prismes s'ajoutent (au moins dans l'approximation des petits angles) et les expressions précédentes sont valables, avec :

$$\left.\begin{array}{l} \theta_{dx} = \theta_{dx1} + \theta_{dx2} \\ \theta_{dy} = \theta_{dy1} + \theta_{dy2} \end{array}\right\} \qquad (5)$$

où : 
$$\left.\begin{array}{l} \theta_{dx1} = \theta_{d1} \cdot \cos \phi_1 \\ \theta_{dx2} = \theta_{d2} \cdot \cos \phi_2 \\ \theta_{dy1} = \theta_{d1} \cdot \sin \phi_1 \\ \theta_{dy2} = \theta_{d2} \cdot \sin \phi_2 \end{array}\right\} \qquad (6)$$

$$\left.\begin{array}{l} \phi_1 = \omega_1 t + \phi_{01} \\ \phi_2 = \omega_2 t + \phi_{02} \end{array}\right\} \qquad (7)$$

Il apparaît que différents modes de balayage sont possibles selon le choix des paramètres $\omega_1$, $\omega_2$, $\phi_{01}$ et $\phi_{02}$.

6

L'un des modes de balayage possibles est le balayage dit linéaire qui est obtenu pour $\omega_1 = -\omega_2$. Cet exemple de balayage est représenté sur la figure 4b où l'on a porté, dans le système d'axe Oxy, la direction de déviation $\theta_d$ sous forme d'un vecteur obtenu par composition des deux déviations élémentaires $\theta_{d1}$ et $\theta_{d2}$, dont les positions initiales sont représentées sur la figure (angles de phase $\phi_{01}$ et $\phi_{02}$, respectivement, avec l'axe 0x). Il apparaît que lorsque les vecteurs $\vec{\theta}_{d1}$ et $\vec{\theta}_{d2}$ tournent à même vitesse angulaire mais en sens inverse, ils s'ajoutent dans une direction 46, déterminée par son angle avec 0x égal à $(\phi_{01} + \phi_{02})/2$, alors que ces composantes s'opposent dans la direction orthogonale 47 ; il en résulte donc, pour l'extrémité du vecteur $\vec{\theta}_d$, un balayage linéaire sur la droite 46 suivant une loi du type $\theta_d = \theta_{d\,max} \cdot \cos\phi$, d'amplitude $\theta_{d\,max}$ égale à $2\theta_{d1}$.

En d'autres termes, la déviation imprimée au faisceau incident (initialement parallèle à ZZ') se situe dans un plan perpendiculaire au plan xOy, dont la trace dans ce plan Oxy est la droite 46, cette déviation variant le temps entre zéro et $2\theta_{d1}$ par rapport à l'axe ZZ'. Il apparaît également que les phases initiales $\phi_{01}$ et $\phi_{02}$ déterminent le plan de balayage (de trace 46) et sa coïncidence éventuelle avec l'un des axes du système, les axes 0x et 0y pouvant être respectivement horizontal et vertical. A titre d'exemple, il est ainsi possible de choisir $\phi_{01}$ et $\phi_{02}$ pour que le plan de balayage soit le plan de site ou de gisement.

Un autre mode de balayage est le balayage conique : lorsque les vitesses angulaires $\omega_1$ et $\omega_2$ sont égales et les phases initiales $\phi_{01}$ et $\phi_{02}$ sont égales également, les déviations élémentaires fournies par chaque prisme $\theta_{d1}$ et $\theta_{d2}$ sont en coïncidence, s'ajoutent et tournent à la même vitesse angulaire. On obtient alors le même type de balayage (conique) qu'avec un seul prisme.

Un troisième exemple de balayage possible avec deux prismes est le balayage dit spirale obtenu dans le cas où $\omega_1 = \omega_2 + d\omega$, $d\omega$ étant inférieur à $\omega_2$. Dans ce cas, la coïncidence entre les deux composantes $\theta_{d1}$ et $\theta_{d2}$ de la déviation ne se produit que lorsque

d $\omega$.t est égal à un multiple pair de $2\pi$ ; au contraire lorsque d$\omega$ .t est égal à un multiple impair de $2\pi$, les composantes de la déviation s'opposent et, si elles sont égales, la résultante est nulle ; il en résulte que l'extrémité du vecteur $\vec{\theta}_d$ dans le plan x0y décrit une spirale dont chaque spire est parcourue à la vitesse $\frac{1}{2}$ ( $\omega_1 + \omega_2$) en un temps égal à $2\pi$/d $\omega$. En ce qui concerne le faisceau émergeant du prisme, il décrit un cône dont l'angle au sommet est variable dans le temps, périodiquement croissant et décroissant.

D'autres modes de balayage sont bien entendu possibles, notamment en augmentant le nombre de prismes.

En ce qui concerne le positionnement des prismes utilisés dans l'antenne selon l'invention, les prismes 21 et 22 ont été représentés sur la figure 2 par exemple de section triangulaire rectangle (par exemple dont l'angle au sommet est arrondi ou coupé), les hypothé- nuses (25 et 26 pour les prismes 21 et 22, respectivement) étant placées du côté de l'antenne 1, un côté de l'angle droit étant disposé perpendiculairement à l'axe ZZ'.

La figure 5 décrit une variante préférée de ce positionnement.

Sur la figure 5a, la disposition des prismes est la même que sur la figure 2 à ceci près que c'est un côté de l'angle droit, respectivement 27 et 28 pour les prismes 21 et 22, qui est placé du côté de l'antenne 1 et non plus l'hypoténuse.

La figure 5b représente une autre variante dans la disposition des prismes 21 et 22 dans laquelle le prisme 21 est disposé de sorte que son côté d'angle droit 27 soit du côté de l'antenne 1 comme dans la figure 5a, le prisme 22 étant disposé comme dans la figure 2, c'est-à-dire son hypoténuse 26 du côté de l'antenne 1.

Sur la figure 5, le prisme 21 est disposé comme sur la figure 2 ; le prisme 22 a son côté de l'angle droit 28 placé du côté de l'antenne 1. De la sorte, les deux prismes présentent deux faces parallèles entre elles (27 pour le prisme 21 et 28), séparées par une distance $\underline{d}$ dont la valeur n'est pas indifférente : en effet, le rayonnement ne doit pas subir de réflexions lors de son passage au travers de la couche intermédiaire d. Cette couche est rendue adaptée, c'est-à-dire non réfléchissante, lorsque son épaisseur (d) est égale à la demi-longueur d'onde du rayonnement, lorsque le milieu intermédiaire est de l'air et dans le cas d'une incidence normale sur les faces 27 et 28. Lorsque l'incidence n'est pas normale, l'épaisseur d est déterminée à l'aide de l'expression suivante :

$$d = \frac{\lambda}{2\sqrt{1-\sin^2\theta_{d1}}} \qquad (8)$$

où $\lambda$ est la longueur d'onde du rayonnement incident et $\theta_{d1}$ la déviation angulaire à la sortie du premier prisme (21).

En ce qui concerne les matériaux constitutifs des prismes 21 et 22, ceux-ci doivent être réalisés à partir de matériaux présentant un indice de réfraction n non négligeable, ainsi que de faibles pertes. A titre d'exemple sont susceptibles de convenir des matériaux tels que téflon (marque déposée), rexolite (marque déposée), quartz ou silice fondue, ou encore des diélectriques artificiels, des matériaux composites tels que stratifiés, verre, quartz, poudre plus résine, ces derniers permettant de plus d'obtenir éventuellement des caractéristiques mécaniques particulières (rigidité, densité, tenue en température etc...).

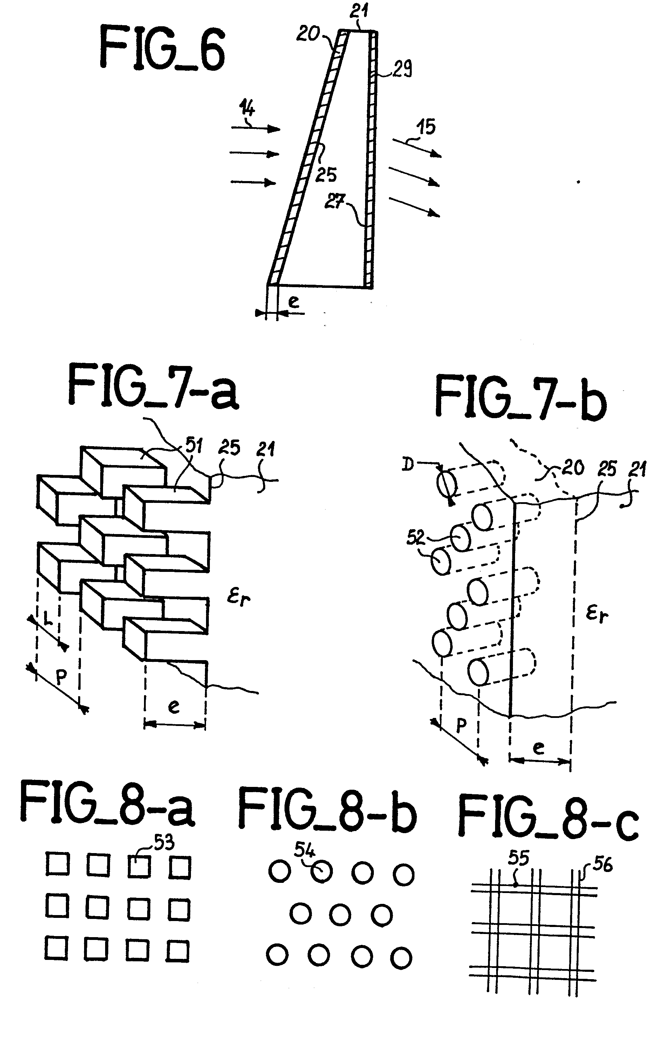

La figure 6 représente une variante de réalisation des prismes utilisés dans l'antenne selon l'invention, variante dans laquelle ceux-ci comportent une couche d'adaptation.

Sur cette figure, on a représenté l'un des prismes, par exemple le prisme 21, dont la face recevant l'énergie incidente 14 et la face par laquelle l'énergie 15 émerge du prisme sont recouvertes chacune d'une couche (respectivement 20 et 29) d'un matériau dont la fonction est d'assurer l'adaptation des interfaces air-diélectrique du prisme.

Pour éviter les réflexions de l'énergie sur les interfaces prisme-air et ainsi assurer l'adaptation, la couche intermédiaire (20, 29), ainsi qu'il est connu, doit avoir un indice de réfraction égal à $\sqrt{n}$, $\underline{n}$ étant l'indice de réfraction du matériau constituant le prisme, et son épaisseur $\underline{e}$ doit être de la forme :

$$e = \frac{\lambda}{4.\sqrt{n}} = \frac{\lambda}{4\sqrt[4]{\varepsilon_r}} \qquad (9)$$

Les formules (9) précédentes donnent une adaptation rigoureuse pour une incidence normale. Toutefois, on constate qu'elles restent satisfaisantes en pratique pour de petits angles d'incidence. Dans le cas d'angle d'incidence plus important, des formules plus générales sont connues (voir notamment l'ouvrage "ANTENNA ENGENEERING HANDBOOK" de H. JASIK, chapitre 14).

Les figures 7a et 7b représentent deux variantes d'un autre mode de réalisation des couches d'adaptation des interfaces prisme-air.

La couche d'adaptation 20 (figure 6) par exemple est réalisée dans la figure 7a à l'aide du même matériau que le prisme 21 mais dont la constante diélectrique équivalente $\varepsilon_{eq}$ est amenée à une valeur égale à la racine de la constante diélectrique du matériau du prisme ( $\varepsilon_{eq} = \sqrt{\varepsilon_r}$ ) par deux séries de rainures orthogonales laissant subsister des dents 51 en forme de parallèlépipède rectangle à base carrée, de pas $\underline{p}$ et de largeur L, l'épaisseur $\underline{e}$ de la couche ainsi constituée étant définie en première approximation par la même expression que précédemment (9).

La figure 7b représente une variante de la figure 7a dans laquelle la couche 20 n'est plus constituée de dents mais par le prisme lui-même dans lequel on a percé des trous 52 cylindriques, de diamètre D, sur l'épaisseur $\underline{e}$ et au pas $\underline{p}$. Les trous sont disposés suivant une maille carrée ou une maille triangulaire, équilatérale par exemple.

Dans le cas de la figure 7a comme dans celui de la figure 7b, le réglage de la valeur souhaitée pour $\varepsilon_{eq}$ est obtenu en jouant sur le choix des paramètres géométriques L, $\underline{p}$ et D, par le calcul (voir l'ouvrage précité) ou expérimentalement.

Un autre mode de réalisation de l'adaptation de l'interface air- prisme consiste à déposer sur l'interface un réseau réactif, constitué d'obstacles répartis périodiquement sur un substrat, venant prendre la place des couches 20 et 29 (figure 6), le substrat portant le réseau ayant ou non la même constante diélectrique que le prisme.

Les figures 8a, b, c, illustrent des exemples de tels réseaux. Sur la figure 8a, on a représenté un réseau capacitif constitué par des obstacles 53 carrés disposés en mailles carrées. Sur la figure 8b, on a représenté également un réseau capacitif constitué d'obstacles en forme de disques 54 disposés en triangles équilatéraux. Sur la figure 8c, on a représenté un réseau selfique constitué par des deux séries 55 et 56 de doubles traits parallèles, les deux séries étant orthogonales entre elles. Ces différents réseaux peuvent avantageusement être photogravés sur le substrat 20 ou 29 (figure 6), le substrat étant par exemple collé ensuite sur le prisme.

La détermination de la valeur de la susceptance du réseau réactif se fait de façon connue (par la théorie des lignes), en fonction de la nature du prisme et de celle du substrat 20 ou 29.

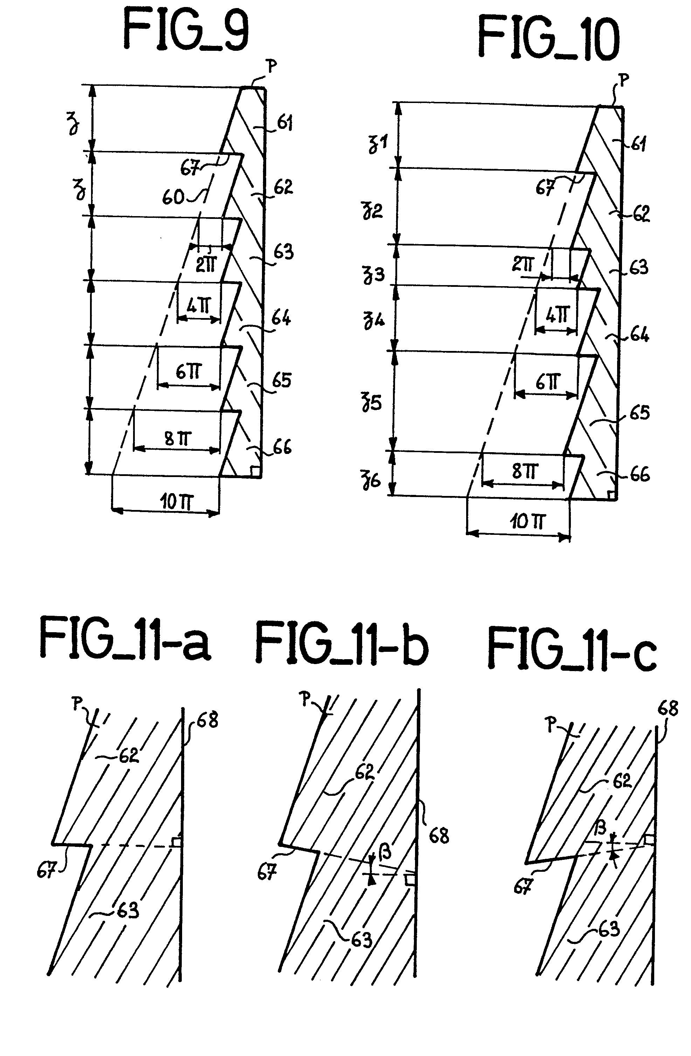

La figure 9 représente un mode de réalisation d'un prisme, vu en coupe, dans lequel le prisme est zoné.

Dans ce mode de réalisation, l'épaisseur du prisme est réduite par la création de zones pour lesquelles le déphasage différentiel entre le matériau constituant le prisme et l'air est à chaque fois réduit de $2k\pi$, k étant un nombre entier.

Sur la figure on a donc représenté un prisme repéré P, qui peut être le prisme 21 ou le prisme 22, vu en coupe et, en pointillé, l'hypoténuse 60 du triangle que formerait le prisme s'il n'était pas zoné. Le prisme est divisé en six zones d'égale largeur $z$ dans cet exemple, avec $z = \lambda/\alpha$, où $\alpha$ est l'angle de déviation du rayonnement émergeant du prisme : la première zone est constituée par le sommet inchangé du prisme et les zones suivantes voient leur épaisseur réduite par un décrochement 67 par rapport à l'hypoténuse 60, correspondant à un déphasage de $2\pi$ par rapport à la zone précédente, à savoir $2\pi$ pour la zone 62 par rapport à la zone 61, $4\pi$

pour la zone 63 par rapport à la zone 61, etc ... jusqu'à $10\pi$ pour la zone 66 par rapport à la zone 61. On obtient ainsi un réseau de prismes élémentaires de largeur $\underline{z}$.

La transition de zone, ou décrochement, 67 est faite en tenant compte de l'éventuelle couche d'adaptation (20, 29, figures 6 à 8), ainsi que de l'angle d'incidence (ou d'émergence, suivant que la face zonée est la face d'entrée ou de sortie du prisme), dans la détermination du déphasage de $2\pi$ mentionné plus haut.

L'avantage de ce mode de réalisation est qu'il permet de rapprocher le centre de gravité du prisme de son centre de rotation et par suite, lorsque le ou les prismes sont en rotation, d'avoir un système mécaniquement plus équilibré.

Ce mode de réalisation a toutefois un inconvénient lié au caractère périodique de la structure : en effet, il résulte de cette périodicité des défauts sur la répartition transversale de l'amplitude du faisceau et l'apparition de lobes parasites de réseau dont la direction angulaire relative à celle du lobe principal est liée à la période de base $\underline{z}$. Pour palier cette inconvénient, on réalise une structure avec des zones d'inégales largeurs comme illustré figure 10.

Sur cette figure 10, on retrouve à titre d'exemple les six zones précédentes 61 à 66, mais les largeurs correspondantes, repérées $z_1$ ... $z_6$, sont différentes les unes des autres, le déphasage d'une zone à la suivante restant égal à $2\pi$. On montre que l'amplitude crête des lobes parasites crés par les transitions de zone est diminuée du fait de l'apériodicité de ces dernières.

Par ailleurs, la transition de zone peut le cas échéant engendrer une ombre ou, plus généralement, une perturbation en amplitude et en phase sur le faisceau sortant du prisme, ce qui conduit à choisir un profil particulier du décrochement 67 suivant les cas.

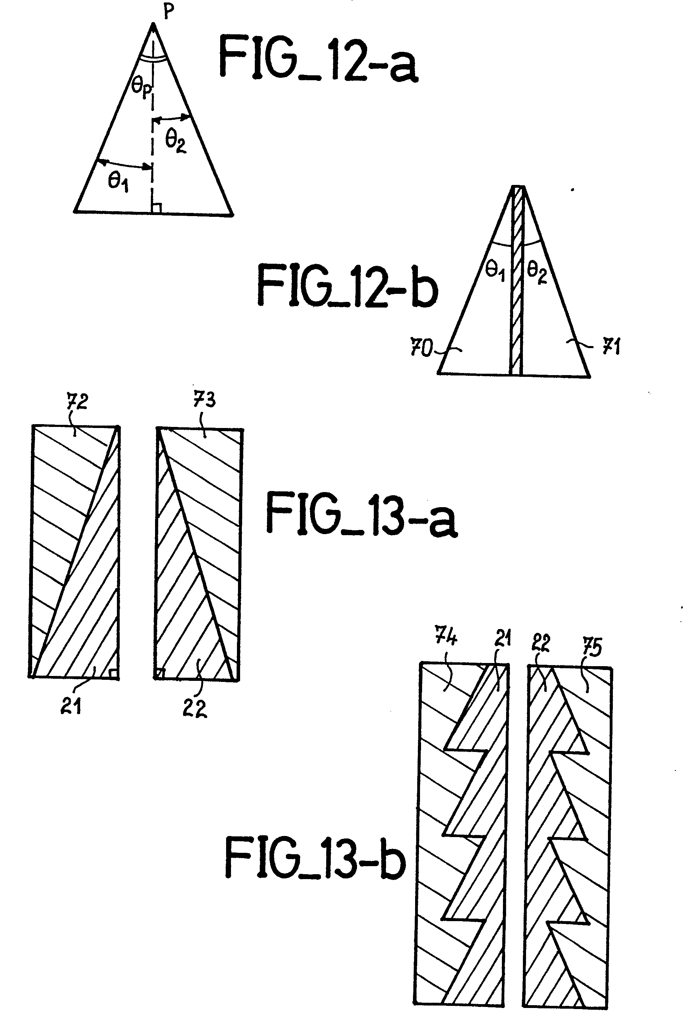

Les figures 11 a, b et c, montrent trois formes possibles pour le décrochement 67 : sur la figure 11a, celui-ci est sensiblement perpendiculaire à la face arrière 68 du prisme ; sur les figures 11b et 11c, le décrochement 67 est incliné par rapport à cette perpendiculaire, respectivement vers le haut ou vers le bas de la figure, d'un angle β.

La figure 12a représente, vue en coupe, une variante de la géométrie des prismes utilisés.

Selon cette variante, le prisme (21 ou 22), d'angle au sommet $\theta_p$, est toujours de section triangulaire mais le triangle est maintenant quelconque ; ce triangle peut se décomposer en deux triangles rectangles d'angle au sommet respectivement $\theta_1$ et $\theta_2$, $\theta_1$ étant sur la figure inférieur à $\theta_2$ mais l'inverse étant bien entendu possible. Dans ce cas, le balayage obtenu avec deux tels prismes peut prendre des allures particulières, elliptique par exemple.

La figure 12b représente une variante de la figure précédente, dans laquelle les indices des deux parties de prisme 70 et 71, respectivement d'angle au sommet $\theta_1$ et $\theta_2$, ne sont pas identiques. Dans ce cas, il est préférable d'insérer une zone intermédiaire 69 entre les deux demi-prismes 70 et 71, assurant l'adaptation des indices et dont l'épaisseur est voisine de $\frac{\lambda}{2n_1}$ si $n_1$ est l'indice de la zone 69. A titre d'exemple, la zone 69 peut être de l'air.

La figure 13a représente une autre variante dans laquelle on retrouve les prismes 21 et 22 de section triangulaire rectangle mais ceux-ci sont associés à un triangle rectangle complémentaire, respectivement 72 et 73, de sorte que l'ensemble prisme et pièce complémentaire forment un parallélépipède rectangle. Les indices des quatre triangles 21, 22, 72 et 73 peuvent être différents. Dans un mode de réalisation préféré, les indices des pièces 72 et 73 sont choisis voisins de l'indice de l'air.

L'avantage de cette variante est qu'elle permet d'éviter les turbulances aéro-dynamiques. Elle est particulièrement avantageuse dans le cas où les prismes 21 et 22 sont zonés, comme représenté sur la figure 13b où les pièces complémentaires sont alors repérées respectivement 74 et 75 pour les prismes zonés 21 et 22.

Il est à noter que les prismes réalisés selon les variantes des figures 13a et 13b peuvent bien entendu comporter en outre une couche d'adaptation entre leurs faces et celles des pièces complémentaires 72-75, telle qu'elle a été décrite aux figures 6 à 8.

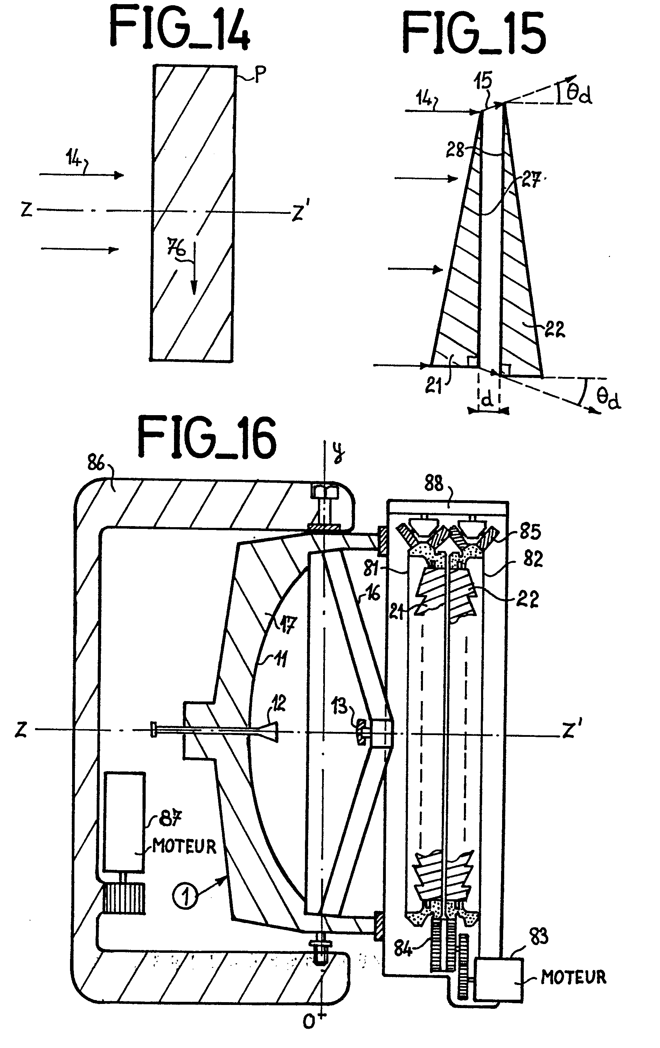

La figure 14 représente un autre mode de réalisation des prismes utilisés dans l'antenne sur l'invention, dans lequel ceux-ci sont réalisés dans un matériau à gradient d'indice.

Sur la figure 14 on a donc représenté, vu en coupe, un prisme P tournant autour de son axe ZZ' et recevant un rayonnement incident 14. Ce prisme est de section rectangulaire et il est réalisé dans un matériau à gradient d'indice de réfraction, c'est-à-dire dont l'indice varie de façon continue dans une direction normale à l'axe ZZ' (flèche 76) et reste constant dans la direction parallèle à l'axe ZZ'. On réalise ainsi la variation du chemin optique, du sommet du prisme vers sa base, non plus par l'épaisseur du matériau traversé qui est ici constante mais par la variation de l'indice du matériau.

Il est à noter dans ce cas que la condition d'adaptation devient également variable, puisqu'elle est fonction de la racine carrée de l'indice de réfraction du matériau constituant le prisme.

La figure 15, représente une variante de réalisation des prismes dans laquelle ceux-ci ne sont pas de dimensions identiques.

En effet, le rayonnement incident 14 peut avoir une ouverture dont le diamètre est égal à la longueur du côté 27 du prisme 21 ; les rayons 15 issus de ce prisme sont susceptibles d'être déviés d'un angle $\theta_d$ dans un sens ou dans l'autre ; pour que le deuxième prisme (22) intercepte toute l'énergie passant à travers le premier prisme 21, il est nécessaire que le prisme 22 ait un côté 28 de plus grande dimension que le côté 27, fonction de la distance $\underline{d}$ entre les prismes 21 et 22, comme représenté sur la figure.

La figure 16 représente un exemple de réalisation pratique de l'antenne selon l'invention.

Sur cette figure, on retrouve l'antenne proprement dite, qui est par exemple du type Cassegrain avec une source hyperfréquence 12, un miroir auxiliaire 13 et un réflecteur 11, par exemple parabolique, formé dans une pièce 17. Le miroir 13 est porté par des haubans 16 solidaires de la pièce 17. La pièce 17 est montée sur un bâti 86 de façon à être mobile autour de l'axe oy, perpendiculaire à l'axe ZZ', sous l'action d'un moteur 87. De la sorte le faisceau issu de l'antenne 1 assure un balayage en gisement.

Solidaire de la pièce 17, tournant donc avec l'antenne 1, on trouve un conteneur 88 contenant les prismes. Les prismes 21 et 22 sont par exemple du type zoné décrit plus haut ; ils sont maintenus chacun par une couronne, respectivement 81 et 82 ; les deux couronnes 81 et 82 sont mises en rotation inverse, dans cet exemple de réalisation, par un moteur 83 et par l'intermédiaire d'engrenages 84. Les couronnes 81 et 82 sont maintenues en place dans le conteneur 88 à l'aide de galets 85. De la sorte, les prismes 21 et 22 tournent autour de l'axe ZZ', assurant un balayage en site (dans le plan de la figure) pendant le mouvement de l'antenne 1 et du conteneur 88 en gisement autour de l'axe oy.

Il a été ainsi décrit ci-dessus une antenne susceptible de fournir un faisceau présentant une grande agilité. Une telle antenne est notamment adaptée aux applications suivantes :
- radar dont la fonction est de créer des images de l'environnement, notamment radar anticollision (embarqué) ;
- radar autodirecteur de poursuite nécessitant de grandes vitesses de balayage ;
- système radiomètre de pointage.

La description faite ci-dessus l'a été bien entendu, à titre d'exemple, non limitatif. C'est ainsi notamment que le nombre de prismes, que comporte l'antenne selon l'invention, n'est pas limité à deux mais est fonction du type de balayage recherché.

## R E V E N D I C A T I O N S

1. Antenne hyperfréquence comportant des moyens (1) d'émission et/ou de réception d'une énergie hyperfréquence dans au moins une direction (ZZ'), caractérisée par le fait qu'elle comporte, placé sur le trajet de l'énergie hyperfréquence, deux prismes animés d'un mouvement de rotation autour de ladite direction (ZZ'), de sorte que l'énergie hyperfréquence issue du prisme balaie l'espace.

2. Antenne selon la revendication 1, caractérisée par le fait que les deux primes sont disposés de sorte qu'ils aient respectivement deux faces en vis-à-vis et sensiblement parallèles, et que la distance (d) séparant ces deux faces en vis-à-vis est voisine de la demi-longueur d'onde ($\lambda$) du rayonnement émis ou reçu par l'antenne.

3. Antenne selon la revendication 2, caractérisée par le fait que les prismes (21, 22) ont chacun une section sensiblement de forme triangulaire rectangle, et qu'ils sont disposés de sorte qu'un côté l'angle droit (27, 28) de chaque prisme (21, 22) soit normal à ladite direction (ZZ') et en vis-à-vis l'un de l'autre.

4. Antenne selon l'une des revendications précédentes, caractérisée par le fait que les prismes sont zonés, c'est-à-dire qu'ils sont constitués chacun par un réseau de prismes élémentaires (61-66) de section triangulaire rectangle, dont les hypoténuses, parallèles entre elles, sont distantes d'une quantité correspondant à $2\pi$ ou un multiple de $2\pi$, et que la largeur (z) des prismes élementaires (61-66) n'est pas constante.

5. Antenne selon l'une des revendications précédentes, caractérisée par le fait que les deux prismes (21, 22) sont animés d'un mouvement de rotation de même vitesse angulaire, mais en sens contraires, assurant un balayage dans un plan.

6. Antenne selon la revendication 5, caractérisée par le fait que les moyens d'émission et/ou de réception (1) émettent ou reçoivent un faisceau balayant l'espace selon un premier plan, et que la phase initiale de rotation des prismes est telle que soit obtenu un balayage selon un deuxième plan, perpendiculaire au premier plan.

7. Antenne selon la revendication 6, caractérisée par le fait que le premier plan est le plan gisement et le deuxième plan, le plan site, ou l'inverse.

8. Antenne selon l'une des revendications 1 à 4, caractérisée par le fait que les deux prismes (21, 22) sont animés de mouvements de rotation autour de ladite direction (ZZ') avec des vitesses angulaires inverses et différentes, telles que le balayage obtenu est du type spirale.

9. Antenne selon l'une des revendications précédentes, caractérisée par le fait que chacun des prismes comporte une couche d'adaptation (20, 29) sur celle de ses faces qui reçoit l'énergie hyperfréquence et/ou sur celle de ses faces par laquelle cette énergie émerge.

10. Antenne selon la revendication 9, caractérisée par le fait que la couche d'adaptation comporte un réseau réactif (53-56).

# FIG_1

# FIG_2

# FIG_3

# FIG_4-a

# FIG_4-b

# FIG_5

FIG_6

FIG_7-a

FIG_7-b

FIG_8-a

FIG_8-b

FIG_8-c

0179687

5/7

# FIG_9

# FIG_10

# FIG_11-a  FIG_11-b  FIG_11-c

FIG_12-a

FIG_12-b

FIG_13-a

FIG_13-b

0179687

# FIG_14

# FIG_15

# FIG_16

Office européen
des brevets

**RAPPORT DE RECHERCHE EUROPEENNE**

0179687

Numéro de la demande

EP 85 40 1831

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 165 448 (C.F.T.H.) <br> * En entier * | 1,5-8 | H 01 Q 3/14 |
| Y | | 2,3 | |
| | --- | | |
| Y | US-A-3 708 796 (G. BONY) <br> * Colonne 3, lignes 16-33 * | 1-3 | |
| | --- | | |
| X | US-A-3 226 721 (R.V. GOULD) <br> * En entier * | 1,4-7 | |
| | --- | | |
| X | US-A-2 571 129 (W.W. HANSEN) <br> * En entier * | 1 | |
| | --- | | |
| X | US-A-3 979 755 (R.W. SANDOZ) <br> * En entier * | 1 | DOMAINES TECHNIQUES RECHERCHES (Int. Cl.4) |
| | ----- | | H 01 Q |

Le présent rapport de recherche a été établi pour toutes les revendications

| Lieu de la recherche | Date d'achèvement de la recherche | Examinateur |
|---|---|---|
| LA HAYE | 02-12-1985 | CHAIX DE LAVARENE C. |